# EUROPEAN PATENT APPLICATION

(11) **EP 0 589 093 A1**
(43) Date of publication of application: **30.03.1994**
(21) Application number: 92202896.4
(22) Date of filing: 22.09.1992
(51) Int. Cl.: A47J 43/07, A47J 43/08, B01F 15/00

(54) **Kitchen robot with smart mixing arm**

(71) Applicant: SIGMA-DELTA N.V., B-3980 Tessenderlo (BE)
(72) Inventor: Duchâtelet Roland, B- 5575 Rienne-Gedinne (BE)

(57) **Abstract**

The key factor is the ability to monitor the mixing process contactless from within the mixture. Therefore, an electronic device (1) (a chip) is implemented inside the mixing arm (2), which is in direct contact with the substance in the bowl (5). The electronics will measure the temperature, the rotation speed, as well as other process parameters, such as electrical resistance and viscosity. These are transmitted to the robot allowing the latter to regulate its motor and heating elements.

Any specific range of preparations (different sauces, soups, etc.) may require a dedicated mixing arm (2) with the appropiate form. In every such arm, a chip (1) will be integrated which is programmed with the optimal preparation parameters (temperature and rotation speed curvers). Once the user has inserted the correct mixing arm (2), the sensor (1) sends the necessary information to the base unit of the robot, enabling the latter to control automatically the optimal speed and temperature.

## Description

### The state of the art:

Present systems sense the temperature at the bowl side. This results in inaccurate measurements due to the thermal inertia of the elements between the mixture and the sensor. If at all, rotation sensing is done by a hall sensor or by monitoring currents in the motor.

### The invention:

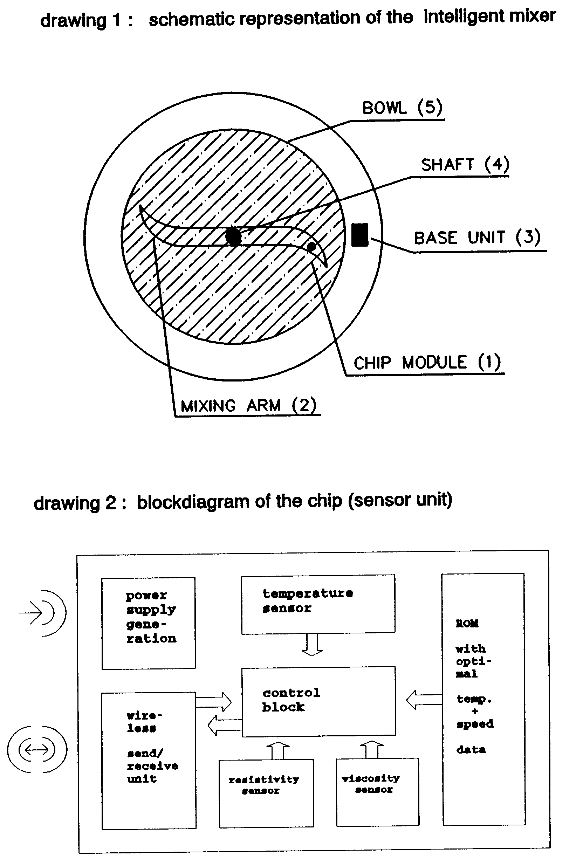

The kitchen robot has a system (see drawing 1) allowing temperature and rotation sensing to be done within the mixture. The sensor is integrated in the chip module (1) of the mixing arm (2), so in the heart of the preparation. The rotation speed will be calculated by counting the turns of the arm and will thus be errorfree.

The electronics to perform the sensing and to transmit the information located in the chip module (1) are completely stand-alone. All communications to the base unit (3) of the robot are done wirelessly.

Every specific range of preparations (different sauces, soups, etc.) requires a dedicated mixing arm with the appropriate form. In every such arm (2), a chip is integrated containing the optimal preparation parameters (temperature and rotation speed curves) in a ROM table. Once the user has inserted the right mixing arm, the robot is able to control automatically the optimal speed and temperature over time.

### Working principle:

A chip module will be mounted inside every mixing arm, while at the side of the bowl (5) of the robot, a base unit (3) is attached containing the control unit of the robot. Both the base unit and the chip module contain a coil.

This base unit (3) sends energy to the chip to power the latter. The power and information are transmitted inductively by magnetic variable fields generated in the coils. A voltage regulator is built on the chip. The chip module measures the process parameters of the mixture during one turn. As it approaches the base unit, which presence is detected by its level of magnetic emission, it transmits the data. The number of transmissions per second is a measurement for the rotation speed of the mixing arm.

Every mixing arm has its own temperature and rotation speed curve programmed in a ROM table. The base unit reads out these tables during the first rotations, compares these reference values with its measurements and then sends control commands to the motor and heating elements in order to reach the optimal mixing conditions.

## Claims

1. Kitchen robot with the special feature that the sensing elements and the program are contained in the mixing arm and the power and data are transmitted contactless through magnetic induction.
Every specific mixing arm (used for a dedicated preparation) contains hardprogrammed all the optimal mixing parameters. So, once the user has inserted the correct mixing arm, all the optimal process parameters will be automatically used.

2. The invention as under #1 with the particularity that the contactless transmission is capacitive instead of inductive, which is possible if the chip module passes closely (a few millimetres) to the base unit.

3. The invention as under #1 whereby the transmission is not contactless but through wires coming down the shaft and with brush contact to the mixing arm.

4. The invention as under #1 whereby the program is not contained in the chip inside the mixing arm, but in the base unit. In this case, the chip transmits its identity code and the control unit selects the appropriate program from the identity of the mixing arm.

5. The invention as under #1 whereby the base unit is physically split into a transmission unit and a control unit.

6. The invention as under #1 whereby the chip module doesn't contain a table in ROM but in EEPROM, whereby the base unit modifies the EEPROM data based on it own learning experience or direct user intervention.
